# EUROPÄISCHE PATENTSCHRIFT

(11) **EP 2 707 438 B1**
(45) Veröffentlichungstag und Bekanntmachung des Hinweises auf die Patenterteilung: **31.08.2016**
(21) Anmeldenummer: 12732952.2
(22) Anmeldetag: 08.05.2012
(51) Int. Cl.: C09D 1/00

(54) **BESCHICHTUNG FÜR POLYMERE**
COATING FOR POLYMERS
REVÊTEMENT POUR POLYMÈRES

(30) Priorität: 11.05.2011 DE 102011101179
(43) Veröffentlichungstag der Anmeldung: 19.03.2014
(73) Patentinhaber: Fachhochschule Kiel, 24149 Kiel (DE)
(72) Erfinder: ES-SOUNI, Mohammed, 24247 Mielkendorf (DE)
(74) Vertreter: Hansen, Jochen
(86) Internationale Anmeldenummer: PCT/DE2012/000463
(87) Internationale Veröffentlichungsnummer: WO 2012/152251

(56) Entgegenhaltungen:
- DE-A1- 19 816 136
- US-A1- 2004 022 706
- US-A1- 2005 272 116

## Beschreibung

Die vorliegende Erfindung bezieht sich auf eine Beschichtung aus Metalloxiden als Auftrag auf organische Polymere als zu beschichtendes Substrat, wobei die Beschichtung sehr dünn ist und eine große Haftung zu den organischen Polymeren aufweist. Die Erfindung bezieht sich in gleichem Maße auch auf ein Verfahren zur Erstellung derartiger Beschichtungen.

Organische Polymer-Materialien haben ein geringes Gewicht, können leicht geformt werden und haben eine gute Schockbeständigkeit gegenüber Metallen und Transparenz dementsprechend weit ist das Feld ihrer Anwendung.

Da organische Polymere durch UV-Strahlung oder das Einwirken hoher mechanischer Kräfte beschädigt werden können, ist es sinnvoll, Beschichtungen aufzubringen, die eben derartige Beschädigungen verhindern.

Es wurden daher in der Vergangenheit bereits einige Beschichtungen insbesondere auf Basis von Polysiloxanen entwickelt.

Wesentliche Vorraussetzung für eine Beschichtung, die sich auch für Substrate mit nanoscaliger Oberflächenstruktur eignet, ist eine geringe Dicke und große Gleichmäßigkeit der Schicht.

So beschreibt die DE 10 335 636 B4 eine Siliziumoxid-Metalloxid-Beschichtung für Kunststoffe, die über Sol-Gel-Verfahren hergestellt werden. Die mit diesem Verfahren erreichbaren Dicken der Schicht sind für Anwendungen, in denen die Nanostruktur der Kunststoff-Substrate erhalten bleiben soll, zu groß, die Gleichmäßigkeiten der Schichten sind hingegen zu gering.

In der DE 198 16136 A1 werden nanostrukturierte Formkörper beschrieben, bei denen es sich um Kunststoff-Substrate handelt, welche mit Siliziumoxid-Metalloxid-Beschichtungen versehen sind. Bei der Herstellung der Schichten wird die Hydrolyse (Alkoholyse) durch Entfernen des gebildeten Alkohols beschleunigt. Nachteil der Siliziumoxid-basierten Schichten ist, dass sie gemeinhin nicht frei von Rissen im Skalen-Bereich von ≤ 100nm sind.

Um die positiven Eigenschaften der Metalle wie z.B. mechanische Robustheit, Druckfestigkeit, hohe Formbeständigkeit, elektrische Leitfähigkeit, Wärmeleitfähigkeit, Reflexionsvermögen mit denen der organischen Polymere (z.B. geringes Gewicht, gute Formbarkeit, Transparenz, und Korrosionsbeständigkeit) zu verbinden, ist es notwendig, die verschiedenen Materialien direkt miteinander zu verkleben, z.B. um nicht gegeneinander verschiebbare Sandwich-Strukturen aufzubauen. Ein Weg zu einer derartigen direkten Verbindung ist es, an beiden Materialien gut haftende Schichten bereitzustellen.

Für viele Anwendungen ist es von großem Vorteil, den Beschichtungen bestimmte physikalische, chemische oder biologische Eigenschaften, wie z.B. Gas- und Feuchteundurchlässigkeit (Barriereeigenschaften), eine bakteriostatische, bakterizide, katalytische oder eine Änderung des Kontaktwinkels betreffende Wirkung zu verleihen.

In diesem Sinne beschreibt die WO 2008/145088 A2 eine robuste, nachträglich in Ihrer Biotoxizität einstellbare Beschichtung für medizinische Implantate auf Basis von Titandioxid und Silber.

Die WO 2009 / 146 674 A1 beschreibt eine Silberionen enthaltende Titandioxidbeschichtung, die durch nachträgliche einmalige Beleuchtung in ihrer Hydrophobizität dauerhaft auf einen persistenten Wert einstellbar ist und sich somit für medizinische Implantate und Innenbeschichtungen von Aufbewahrungs und Reaktionsgefäßen eignet.

Aus der US 2005/0272116 A1 ist ein Polymer bekannt, welches über Hydroxygruppen und/oder Aminogruppen verfügt, mit einem Anhydrid eines Komplexbildners umgesetzt.

Ferner zeigt die US 2002/0007767 A1 allgemein den Einsatz von Komplexbildnern und Hydrolyse-Beschleunigern in Zusammenhang mit Sol-Gel-Prozessen.

Nachteil der beiden letztgenannten Metalloxidschichten ist, das ihre Adhäsion auf organischen Polymeren und ihre Kohäsion nicht ausreicht, um eine Verklebung von Metall und organischem Polymer zu realisieren.

Aufgabe der Erfindung ist die sehr dünne, gleichmäßige, haftfähige und rissfreie Beschichtung von organischen Polymeren mit einer Schicht, welche ebenfalls auf Metallen eine sehr gute Haftfähigkeit besitzt und welche ggf. noch Nanopartikel zur Funktionalisierung enthält.

Die Aufgabe wird gelöst durch eine Beschichtung zum Auftrag auf organische Polymere als zu beschichtendes Substrat, wobei die Beschichtungsmasse zur Ausbildung der Beschichtung mindestens eine Chemikalie ausgesucht aus der Liste, umfassend:
- Metallalkoholate
- Metallester
- Metallsalz
aufweist, **dadurch gekennzeichnet,**
dass die Beschichtungsmasse ferner aufweist:
- mindestens einen Komplexbildner,
- mindestens einen Hydrolysebeschleuniger,
wobei die aus der Beschichtungsmasse gebildete Beschichtung ein oder mehrere Metalloxide der Metalle ausgesucht aus der Liste, umfassend: Al, Ga, Ge, Sn, Pb, Ti, Zr, V, Nb, Ta, Mo, W und Zn enthält.

In einer bevorzugten Ausführungsform wird die Aufgabe gelöst durch eine Beschichtung, in der das mindestens eine Metalloxid zu mindestens 80 Gew.-% - besonders bevorzugt zu mindestens 90 Gew.-% - bezogen auf die Gesamtmasse der Beschichtung, in dieser Beschichtung enthalten ist.

In einer bevorzugten Ausführungsform wird die Aufgabe gelöst durch eine Beschichtung, in der das Metallalkoholat ausgesucht ist aus der Liste, umfassend:
Aluminiumbutylat, Titanisopropoxid, Titanpropoxid, Titanbutoxid, Zirkoniumisopropoxid, Zirkoniumpropoxid, Zirkoniumbutoxid, Zirkoniumethoxid, Tantalethoxid, Tantalbutoxid, Niobethoxid, Niobbutoxid, Zinn-t-butoxid, Wolfram (VI) ethoxid, Germaniumethoxid, und Germanium- isopropoxid.

In einer weiteren bevorzugten Ausführungsform wird die Aufgabe gelöst durch eine Beschichtung, in der der Metallester ausgesucht ist aus der Liste, umfassend:
Zinkethylhexanoat, Zinkneodecanoat, Zinkoctanoat Zinkacetylacetonat, Zinnethylhexanoat, Zinnoctanoat, Zinnlaurat, Dibutylzinndimaleat, Dioctylzinndiacetat und Aluminiumtri(ethylacetoacetat).

In einer weiteren bevorzugten Ausführungsform wird die Aufgabe gelöst durch eine Beschichtung, in der der Komplexbildner ausgesucht ist aus der Liste, umfassend:
Ethylendiamin (EDA), Diethylentriamin (DETA), Triethylentetramin (TETA)
Ethylendiamintetraessigsäure (EDTA) 2-(2-Aminoethylamino)ethanol (AEEA)
Diethanolamin (DEA) und Diethylentriaminpentaessigsäure (DTPA)

In einer bevorzugten Ausführungsform wird die Aufgabe gelöst durch eine Beschichtung, in der die Beschichtungsmasse mindestens ein Kation eines Metalles enthält, ausgesucht aus der Liste, umfassend:
Kupfer (Cu), Silber (Ag), Gold (Au), Platin (Pt), Nickel (Ni), Pladium (Pd), Lithium (Li), Zink (Zn) und Eisen (Fe).

In einer besonders bevorzugten Ausführungsform wird die Aufgabe gelöst durch eine Beschichtung, in der die Beschichtungsmasse Silberkationen enthält.

In einer weiteren bevorzugten Ausführungsform wird die Aufgabe gelöst durch eine Beschichtung, in der die Beschichtungsmasse mindestens eine Säure enthält, ausgesucht aus der Liste, umfassend:
- hydratisierte Hexachloroplatinsäure (H2[PtCl6] • n H2O),
- hydratisierte Hexachloropalladiumsäure (H2[PdCl6] • n H2O),
- hydratisierte Tetrachlorogoldsäure (H[AuCl4] • x H2O).

In einer bevorzugten Ausführungsform wird die Aufgabe gelöst durch eine Beschichtung, in der das molare Verhältnis von Metall zu Komplexbildner in der Beschichtungsmasse in einem Bereich von 1:4 bis 1:20 liegt.

Die zugrundeliegende Aufgabe einer sehr dünnen, rissfreien, gleichmäßigen und sehr gut haftenden Beschichtungen aus Metalloxiden auf organischen Polymeren wird in einen weiteren Aspekt gelöst durch ein Verfahren zur Herstellung einer solchen Beschichtung, mindestens die Verfahrensschritte aufweisend
i) Bereitstellen einer alkoholischen und / oder wässrigen Lösung A eines Metallalkoholates und/oder eines Metallesters und/oder eines Metallsalzes; wobei es sich um Metallalkoholate und/oder Metallester und/oder Metallsalze der Metalle Al, Ga, Ge, Sn, Pb, Ti, Zr, V, Nb, Ta, Mo, W und Zn handelt.
ii) Vermischen der Lösung A mit einem Komplexbildner zur Herstellung einer Lösung B;
iii) Bereitstellen eines Hydrolysebeschleunigers aus einer alkoholischen und/oder wässrigen Lösung C von Ammoniumhydroxid und/oder Harnstoff und/oder Ammoniak;
iv) Zusammengeben von Lösung B und Lösung C zur Ausbildung von Lösung D;
v) Eintauchen des organischen Polymers als zu beschichtendes Substrat in die Lösung D für einen Zeitraum in einem Bereich von 5 Minuten bis 4 Stunden zur Erzeugung der Beschichtung;
vi) Entnahme des beschichteten Substrates aus der Lösung D;
vii) Behandlung des beschichteten Substrates mit Ultraschall;
viii) Trocknung des beschichteten Substrates.

In einer bevorzugten Ausführungsform wird die Aufgabe gelöst durch ein Verfahren zur Herstellung einer Beschichtung, mindestens den zusätzlichen Verfahrensschritt aufweisend:
Zugabe eines Salzes oder einer Säure zur Funktionalisierung zur Lösung B, wobei Säuren zur Funktionalisierung ausgewählt sein können aus der Gruppe hydratisierte Hexachloroplatinsäure (H₂[PtCl₆] • n H₂O), hydratisierte Hexachloropalladiumsäure (H₂[PdCl₆] • n H₂O) oder hydratisierte Tetrachlorogoldsäure (H[AuCl₄] • x H₂O) und wobei die Salze aus Anionen und Kationen bestehen und die Kationen Kationen von Metallen sein können ausgewählt aus der Gruppe Kupfer (Cu), Silber (Ag), Gold (Au), Platin (Pt), Nickel (Ni), Pladium (Pd), Lithium (Li), Zink (Zn) und Eisen (Fe)

In einer bevorzugten Ausführungsform wird die Aufgabe gelöst durch ein Verfahren zur Herstellung einer Beschichtung, dadurch gekennzeichnet, dass die Konturen des Polymeren Substrates nach Beschichtung im Bereich von kleiner gleich 1µm erhalten bleiben.

In einer bevorzugten Ausführungsform wird die Aufgabe gelöst durch ein Verfahren zur Herstellung einer Beschichtung, dadurch gekennzeichnet, dass das molare Verhältnis von Metall zu Komplexbildner in der Beschichtungsmasse in einem Bereich von 1:4 bis 1:20 liegt.

In einer bevorzugten Ausführungsform wird die Aufgabe gelöst durch ein Verfahren zur Herstellung einer Beschichtung, dadurch gekennzeichnet, dass sich die Schichtdicke der Beschichtung durch die Wahl der Dauer für das Eintauchen und dem molaren Verhältnis von Metall und Komplexbildner einstellen lässt.

Es ist möglich, wenn die erfindungsgemäß notwendigen Schritte i), ii) und iii) sowie der optionale Schritt der Zugabe eines Salzes oder einer Säure zur Funktionalisierung zur Lösung B auch gleichzeitig ablaufen können.

Bevorzugt werden die Schritte i), ii), iii) und iv) unter Rühren durchgeführt.

Es gilt ebenfalls als eine bevorzugte Ausführungsform des vorgeschlagenen Verfahrens, wenn die Schritte i), ii), iii) und iv) bei Raumtemperatur stattfinden.

Bevorzugt findet der erfindungsgemäße Verfahrensschritt v) in einem Temperaturintervall zwischen Raumtemperatur und 70°C statt. Dieses hängt in für den Fachmann geläufiger Weise von den Siedepunkten des verwendeten Alkohols und den Glasübergangstemperaturen des polymeren Substrates ab. Beide Temperaturen sollten nicht überschritten werden. Durch eine erhöhte Temperatur lässt sich die Zeit für die Erzeugung einer erfindungsgemäßen Schicht verkürzen, dieses kann, wenn kurze Produktionszeiten erwünscht sind von Vorteil sein.

Es stellt ebenfalls eine bevorzugte Ausführungsform des vorgeschlagenen Verfahrens dar, wenn die Verfahrensschritte vi) und vii) bei Raumtemperatur stattfinden.

Der Verfahrensschritt viii) und eine optionale Aktivierung zur Funktionsalisierung im Anschluss an Verfahrensschritt viii) können bei gegenüber der Raumtemperatur erhöhter Temperatur stattfinden, die Wahl der Temperatur hängt von der Glasübergangs- Schmelz- oder Zersetzungstemperatur u. A. des polymeren Substrates ab. Bevorzugt sind Temperaturen zwischen Raumtemperatur und 100°C. Bei einer Aktivierung der Funktionalisierung durch UV-Bestrahlung kann es zu einer Erwärmung kommen dieses ist für den Fachmann in geläufiger Weise zu berücksichtigen.

Die erfindungsgemäße Behandlung des beschichteten Substrates mit Ultraschall gemäß Verfahrensschritt vii) dient der Reinigung und Entfernung nicht zum System gehöriger grober Partikel und erfolgt in Alkohol, bevorzugt in Ethanol. Zur Durchführung kann ein zu Reinigungszwecken übliches im Handel erhältliches Ultraschallbad verwendet werden. Die Dauer der Behandlung beträgt bevorzugt 0,5 bis 5 Minuten, gegebenenfalls ist eine längere Behandlung angezeigt.

Als in Verfahrensschritt vii) verwendeter Alkohol kommen hier bevorzugt organische Verbindungen mit einer gesättigten oder ungesättigten, verzweigten oder nicht verzweigten Kohlenstoffkette der Länge C1 bis C6 in Frage, besonders bevorzugt sind Alkohole, die über eine gesättigte, verzweigte oder unverzweigte Kohlenstoffkette der Länge C1 bis C6 verfügen. Ganz besonders bevorzugt kommen die Alkohole Methanol, Ethanol, Propanol, Butanol, iso-Propanol und tert.-Butanol zum Einsatz.

Im Sinne der vorliegenden Erfindung und insbesondere auch mit Blick auf die Lösung A bedeutet alkoholische Lösung, dass hier ein Alkohol entsprechend obiger Definition enthalten ist.

Als Metallalkoholate kommen insbesondere Alkoholate in Frage, die eines oder mehrere Elemente enthalten, die ausgewählt sind aus den Haupt- und Nebengruppen-Metallen. Bei den Haupt- und Nebengruppen- Metallen handelt es sich vorzugsweise um solche aus der dritten und vierten Hauptgruppe (insbesondere Al, Ga, Ge, Sn und Pb) und der dritten bis fünften Nebengruppe des Periodensystems (insbesondere Ti, Zr, V, Nb, Ta, Mo und W). Es können jedoch auch andere Metallalkoholate zu vorteilhaften Ergebnissen führen, wie beispielsweise solche von Zink (Zn). Beispiele für derartige Verbindungen sind Aluminiumbutylat, Titanisopropoxid, Titanpropoxid, Titanbutoxid, Zirkoniumisopropoxid, Zirkoniumpropoxid, Zirkoniumbutoxid, Zirkoniumethoxid, Tantalethoxid, Tantalbutoxid, Niobethoxid, Niobbutoxid, Zinn-t-butoxid. Wolfram (VI) ethoxid, Germaniumethoxid, und Germanium- isopropoxid.

Als Metallester sind insbesondere Ester bevorzugt, die eines oder mehrere Elemente enthalten, die ausgewählt sind aus den Haupt- und Nebengruppen-Metallen. Beispiele für solche Verbindungen sind Zinkethylhexanoat, Zinkneodecanoat, Zinkoctanoat Zinkacetylacetonat, Zinnethylhexanoat, Zinnoctanoat, Zinnlaurat, Dibutylzinndimaleat, Dioctylzinndiacetat oder auch Aluminiumtri(ethylacetoacetat).

Die Metallsalze setzen sich aus Metallkationen und Anionen zusammen. Als Metallsalze kommen bevorzugt Salze in Frage, deren Metallkationen ausgewählt sind aus Kationen der Haupt- und Nebengruppen-Metalle. Bei den Haupt- und Nebengruppen- Metallen handelt es sich vorzugsweise um solche aus der dritten und vierten Hauptgruppe (insbesondere Al, Ga, Ge, Sn und Pb) und der dritten bis fünften Nebengruppe des Periodensystems (insbesondere Ti. Zr, V, Nb, Ta, Mo und W). Es können jedoch auch andere Metallkationen zu vorteilhaften Ergebnissen führen, wie beispielsweise solche von Zink (Zn). Als Anionen dieser Metallsalze kommen Nitrat, Chlorid, Sulfat, in Frage.

Als Komplexbildner sind insbesondere solche Verbindungen bevorzugt, die über freie Elektronenpaare als Koordinationsstellen verfügen, ganz besonders bevorzugt sind solche Verbindungen, die über mehr als eine Koordinationsstelle verfügen (Chelat-Liganden), besonders bevorzugt sind Chelat-Liganden, die über mindestens ein freies Elektronenpaar am Stickstoff binden. Beispiele für derartige Chelat-Liganden sind Ethylendiamin (EDA), Diethylentriamin (DETA), Triethylentetramin (TETA) Ethylendiamintetraessigsäure (EDTA) 2-(2-Aminoethylamino)ethanol (AEEA) Diethanolamin (DEA) und Diethylentriaminpentaessigsäure (DTPA).

Substrate im Rahmen der vorliegenden Erfindung sind organische Polymere, welche bevorzugt in Form von synthetischen Polymeren eingesetzt werden. Derartige Polymere können ausgewählt sein aus der Gruppe der Polymethacrylate, Polyacrylate, Polycarbonate, Polyester, Polyamide, Polyimide, Potyesterimide, Polyamidimide, Polyether, Polyethylenen, Polypropylenen und Polystyrolen. Ganz besonders bevorzugt sind solche Substrate, die über eine sehr feine Oberflächenstruktur verfügen insbesondere sogenannte Polymer-Netze.

Als Salze zur Funktionalisierung gelten insbesondere Verbindungen als bevorzugt, die aus Anionen und Kationen aufgebaut sind und die erforderliche Löslichkeit besitzen.

Mögliche Anionen sind Nitrat (NO₃), Nitrit (NO₂⁻), Amid (NH₂⁻). Azid (N3⁻), Chlorid (Cl⁻), Bromid (Br⁻), Jodid (J⁻), Fluorid (F⁻), Chlorat (ClO₃⁻), Bromat (BrO₃⁻), Jodat (JO₃⁻), Chlorit (ClO₂⁻), Bromit (BrO₂⁻), Jodit (JO₂⁻) Sulfat (SO₄²⁻), Sulfit (SO₃²⁻), Phosphat (PO₄³⁻), Hydrogenphosphat (HPO₄²⁻ und H₂PO₄⁻), Carbonat (CO₃²⁻), Hydrogencarbonat (HCO₃⁻), Cyanid (CN⁻), Cyanat (OCN⁻), Thiocyanat (SCN⁻) und die Anionen organischer Säuren (z.B Oxalat, Acetat, Tartrat).

Durch die Wahl des Kations ist es möglich, die Eigenschaften des Systems zu beeinflussen. Besondere Bedeutung kommt hier den Kationen der Metalle Kupfer (Cu), Silber (Ag), Gold (Au), Platin (Pt), Nickel (Ni). Pladium (Pd), Lithium (Li), Zink (Zn) und Eisen (Fe) zu. Bei Verwendung von Silber-Kationen (Ag⁺) können diese durch einen nachfolgenden Verfahrensschritt durch Bestrahlung mit UV-Licht zu Silber (Ag⁰) reduziert werden. Auf diesem Wege entstehen katalytisch aktive, antibakteriell wirksame Beschichtungen.

Des Weiteren ist es möglich, durch Zugabe von Säuren, deren korrespondierende Base ein Anion darstellt, welches über ein Metall verfügt und aus mehr als einem Element besteht, über den Verfahrensschritt 3 funktionelle Metalle einzuführen. Ganz besonders bevorzugte Beispiele für derartige Säuren sind die hydratisierte Hexachloroplatinsäure (H₂[PtCl₆] • n H₂O), hydratisierte Hexachloropalladiumsäure (H₂[PdCl₆] • n H₂O) oder hydratisierte Tetrachlorogoldsäure (H[AuCl_{4]} • x H₂O). Auf diesem Wege können Kationen funktionaler Metalle (z.B. Pt, Pd oder Au) eingeführt werden. Durch Reduktion der Kationen z.B durch UV-Bestrahlung lassen sich so katalytisch wirksame Schichten erzeugen. Des Weiteren ist es möglich so Metalle für die Ankopplung bestimmter auch biologischer Gruppe (z.B. Antikörper) durch die Erfindungsgemäßen Schichten einzuführen.

Es hat sich als besonderer Vorteil erwiesen, die Dicke der erfindungsgemäßen Beschichtungen durch die Wahl des erfindungsgemäß eingebundenen Hydrolysebeschleunigers und der Konzentrationsverhältnisse an Metall -stammend aus dem Metallalkoholat und oder Metallester und oder Metallsalz- und Komplexbildnern gezielt zu steuern.

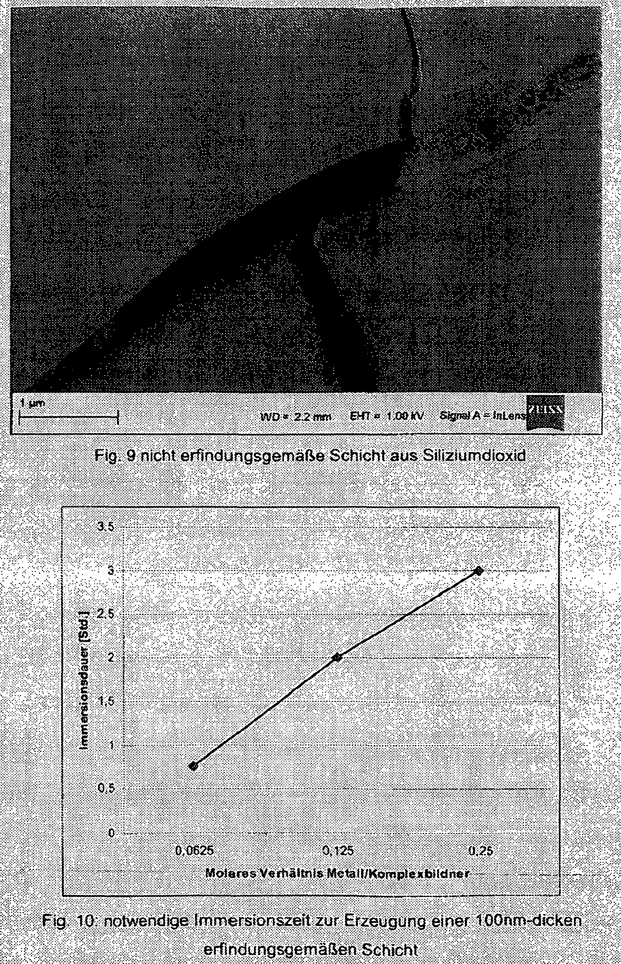

Wird beispielsweise ein molares Verhältnis von Metall z.B. Ti aus dem Metallalkoholat Titanpropoxid und dem Komplexbildner Ethylendiamin von 1:4 (0,25) gewählt, so wird eine Immersionsdauer von 45 Minuten (0,75 Std.) benötigt, bei einem molaren Verhältnis von Metall z.B. Ti aus dem Metallalkoholat Titanpropoxid und dem Komplexbildner Ethylendiamin vorn 1:8 (0,125) wird eine Immersionsdauer von 2 Stunden benötigt, bei einem Verhältnis von Metall z.B. Ti aus dem Metallalkoholat Titanpropoxid und dem Komplexbildner Ethylendiamin von 1:16 (0,0625) wird eine Immersionsdauer von 3 Stunden benötigt. Dieser Zusammenhang ist graphisch in Fig. 10 gezeigt.

Die erfindungsgemäßen Beschichtungen bestehen zu größer gleich 80 Gew.%, insbesondere bei Verzicht auf die optionale Zugabe eines Salzes oder einer Säure bevorzugt zu größer gleich 85 Gew.%, bei Verzicht auf die optionale Zugabe eines Salzes oder einer Säure besonders bevorzugt zu größer gleich 90 Gew.% aus den Metalloxiden der im Verfahrensschritt 1 eingesetzten Metallalkoholate, Metallester und Metallsalze.

Von vielen Metalloxiden ist bekannt, dass sie sehr gut haftende Schichten auf Metallen bilden können. Für eine hochfeste Verbindung / Verklebung der beiden Materialien organisches Polymer und Metall wären also auf organischen Polymeren gut haftende, Metalloxid-Schichten von großem Vorteil.

Die erfindungsgemäßen Beschichtungen sind sehr dünn, bevorzugte Schichtdicken liegen bei ≤ 100nm.

Die erfindungsgemäßen Beschichtungen weisen keine Risse oder Beschädigungen auf.

### Kurze Beschreibung der Figuren

Die Fig. 1 bis 9 zeigen rasterelektronenmikroskopischen Aufnahmen (SEM) (Scanning Electron Microscope) von polymeren Substraten. Als Polymere Substrate wurden bevorzugt Netze aus Polymeren, sogenannte Polymer-Netze aus Polypropylen verwendet.
   Die Struktur eines unbeschichteten Polymer-Netzes ist in Fig. 1 zu sehen.
Fig 2 zeigt einen Ausschnitt aus Fig. 1 vergrößert dargestellt.
   In den Figuren 3 bis 7 sind die rasterelektronenmikroskopischen Aufnahmen (SEM) (Scanning Electron Microscope) von erfindungsgemäß beschichteten polymeren Substraten zu sehen.

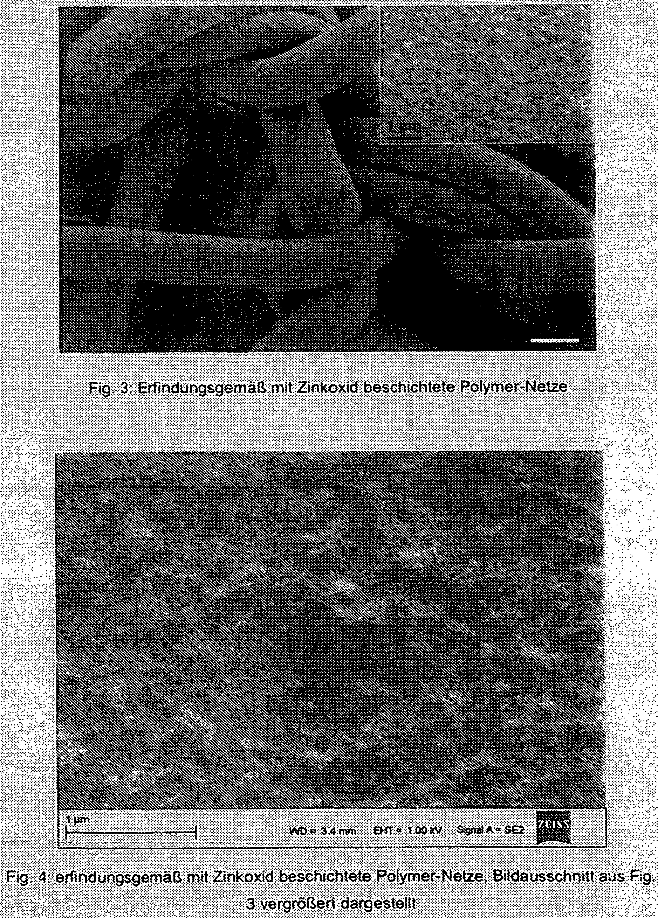

Fig. 3: erfindungsgemäß mit Zinkoxid beschichtete Polymer-Netze
Fig. 4: erfindungsgemäß mit Zinkoxid beschichtete Polymer-Netze, Bildausschnitt aus Fig. 3 vergrößert dargestellt

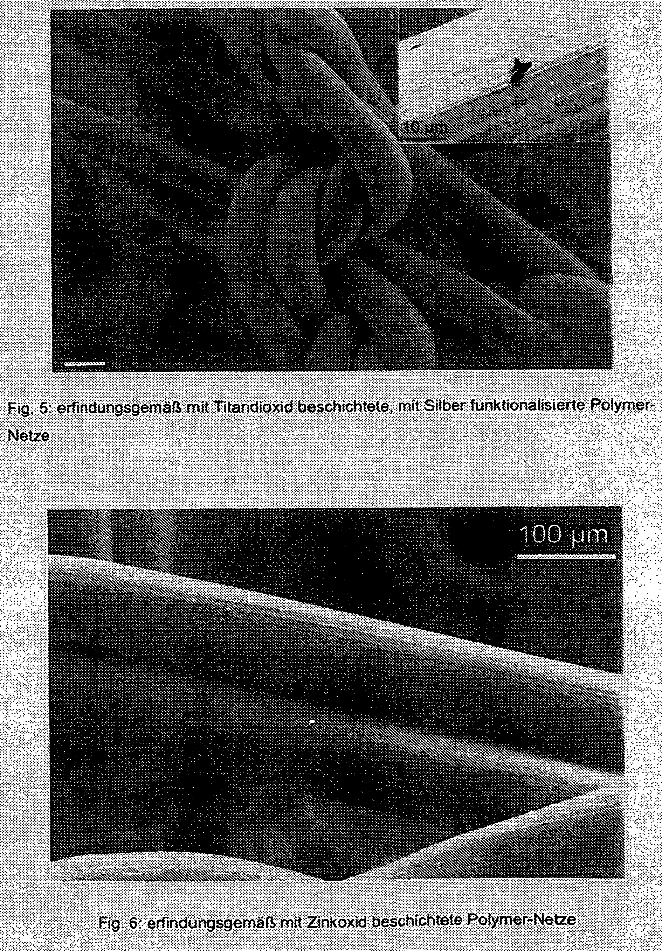

Fig. 5: erfindungsgemäß mit Titandioxid beschichtete, mit Silber funktionalisierte Polymer-Netze
Fig. 6 erfindungsgemäß mit Zinkoxid beschichtete Polymer-Netze, Variation der erfindungsgemäßen Verfahrensschritte i) und ii)

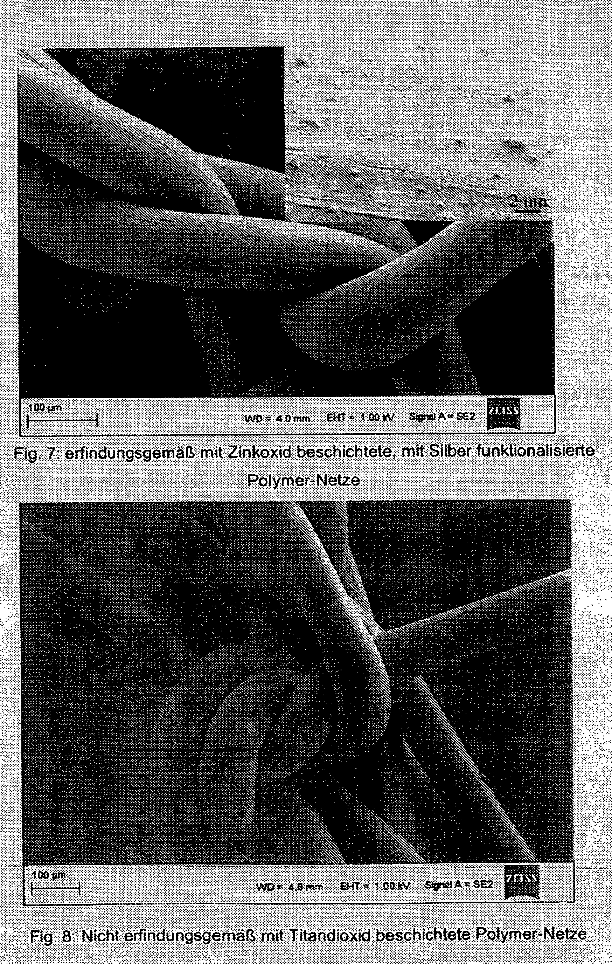

Fig. 7: erfindungsgemäß mit Zinkoxid beschichtete, mit Silber funktionalisierte Polymer-Netze
Fig. 8: SEM-Aufnahme einer ungleichmäßigen, nicht haftfähigen Schicht, die hergestellt wurde ohne Komplexbildner und Hydrolysebescheuniger in der Beschichtungsmasse.
Fig. 9: SEM-Aufnahme einer rissigen Beschichtung die kein Metalloxid mit einem Anteil von 80 Gew.% enthält, sondern stattdessen aus Siliziumdioxid aufgebaut ist.
Fig. 10 zeigt die Immersionszeit (Verfahrensschritt v) welche bei Raumtemperatur zur Erzeugung einer 100nm-dicken erfindungsgemäßen Schicht notwendig ist, in Abhängigkeit von dem eingesetzten molaren Konzentrationsverhältnis von Metall zu Komplexbildner.

Eine genaue Darlegung der Herstellung der einzelnen Schichten befindet sich in der Beschreibung am Ende.

Fig. 3 zeigt eine erfindungsgemäße Beschichtung

Zur Herstellung der Lösung A (erfindungsgemäßer Verfahrensschritt i) wurde Zink-2-ethylhexanoat in Ethanol verwendet. Als Komplexbildner (erfindungsgemäßer Verfahrensschritt ii) wurde Ethylendiamin im zweifachen Überschuss bezogen auf das molare Verhältnis verwendet. Die Eintauchzeit (Verfahrensschritt v) betrug 2 Stunden bei Raumtemperatur.

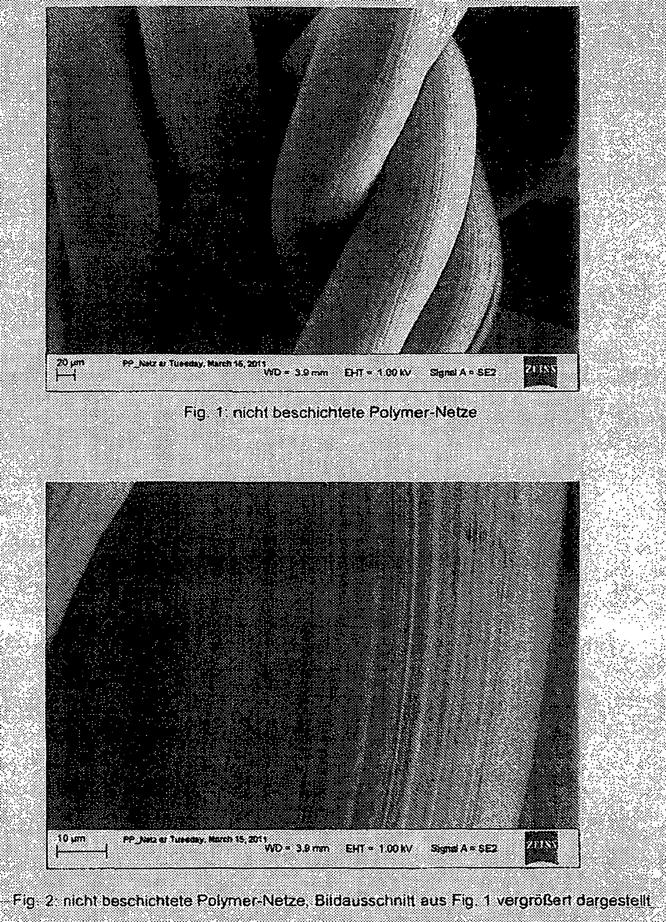

Bei Einsatz der erfindungsgemäßen Beschichtungen bleiben Strukturen des polymeren Substrates, welche eine Größenordnung von weniger als 100nm haben, erhalten. Dieses ist auch in Fig. 2 zu erkennen - hier ist der Bildausschnitt aus der Fig. 1 noch einmal vergrößert dargestellt.

Sehr feine Strukturen des Polymersubstrates bleiben auf Grund der geringen Dicke und der guten Haftfähigkeit der erfindungsgemäßen Beschichtung erhalten.

Die erfindungsgemäßen Beschichtungen weisen eine hohe Haftfähigkeit auf.

Zur Demonstration der Haftfähigkeit kann der sogenannte Tesa-Band-Test herangezogen werden. Bei diesem Test wird ein für den Einsatz im Büro handelsübliches einseitiges Klebeband (z.B. Tesafilm transparent oder Scotsh Magic 810) bei Raumtemperatur für einige Sekunden bis zu vollständigen Klebung auf das beschichtete Material manuell aufgedrückt und anschließend abgezogen. Die Beschichtung des Materials bleibt trotz dieser Behandlung erhalten und wird nicht durch das Klebeband entfernt.

Die erfindungsgemäßen Schichten können zur Funktionalisierung der organischen Polymersubstrate genutzt werden. So können dem Material auch durch Beifügen von bestimmten Nano-Partikeln erwünschte physikalische, chemische oder biologische Eigenschaften, wie z.B. eine bakteriostatische, bakterizide, katalytische oder eine Änderung des Kontaktwinkels betreffende Wirkung verliehen werden.

Fig. 5 zeigt eine mit Silber funktionalisierte Beschichtung, als Metallalkohlat wurde Titanpropoxid verwendet. Als Komplexbildner wurde EDA verwendet Im Verfahrensschritt 4 kam als Hydrolysebeschleuniger Ammoniak zum Einsatz.

Die Eintauchzeit (Verfahrensschritt v) betrug 2 Stunden bei Raumtemperatur. Zur Funktionalisierung wurde im Verfahrensschritt 3 Silbernitrat (AgNO₃) (0.2 M bezogen auf Ti) zugegeben.

Bei Verwendung von Silber-Kationen (Ag⁺) durch Einsatz von Silbernitrat (AgNO₃) werden Silber-Kationen platziert. Diese können in einem nachfolgenden Schritt (Verfahrensschritt 10) durch Bestrahlung mit UV-Licht zu Silber (Ag⁰) reduziert werden. Auf diesem Wege entstehen katalytisch aktive, antibakteriell wirksame und in ihrer Hydrophobizität einstellbare Beschichtungen.

Die Silber (Ag⁰)-Partikel sind in der Fig. 5 als dunkle Partikel zu erkennen.

Die Fig 6 zeigt ebenfalls erfindungsgemäß mit Zinkoxid beschichtete Polymer-Netze hier wurde im Verfahrensschritt i) Zinknitrat ((Zn(NO₃)₂) und als Komplexbilder Diethanolamin (DEA) (Verfahrensschritt ii) verwendet.

In Fig. 7 ist eine ebenfalls mit Silber funktionalisierte erfindungsgemäße Beschichtung mit Zinkoxid zu sehen. Zur Herstellung der Lösung A (erfindungsgemäßer Verfahrensschritt i) wurde Zink-2-ethylhexanoat in Ethanol verwendet. Als Komplexbildner (erfindungsgemäßer Verfahrensschritt ii) wurde Ethylendiamin im zweifachen Überschuss bezogen auf das molare Verhältnis verwendet. Die Silber (Ag⁰)-Partikel sind in der Fig. 5 als Partikel mit einer maximalen Größe von 0,5 - 2 µm zu erkennen.

Fig. 8 zeigt eine nicht erfindungsgemäße ungleichmäßige Beschichtung von Titandioxid auf Polymer-Netzen in diesem Fall wurde auf den Komplexbildner und auf den Hydrolysebeschleuniger in der Beschichtungsmasse verzichtet. Die Ungleichmäßigkeit der Schicht, sowie ihre schlechte Haftfähigkeit sind deutlich an den hellen und den abgeblätterten Stellen zu erkennen. Als Metallalkohlat wurde hier Titanpropoxid verwendet.

Fig. 9 zeigt ebenfalls eine nicht erfindungsgemäße Schicht aus Siliziumdioxid (SiO₂). Es ist kein Metalloxid in einen Anteil mehr als 10 Gew.-% in der Beschichtung enthalten. Es sind deutlich die Risse in der Größenordnung von 1-500 nm zu erkennen, derartige Schichten sind aufgrund dieser Risse nicht geeignet, polymere Substrate unter Erhalt der im Material vorhandenen Struktur zu beschichten und weisen aufgrund der Risse auch eine verminderte Haftfähigkeit und Kohäsion auf und sind somit auch nicht geeignet um polymere Substrate mit Metall zu verkleben. zur Herstellung dieser Schicht wurde statt einer alkoholischen Lösung eines Metallalkoholates und/oder eines Metallesters und/oder eines Metallsalzes eine alkoholische Lösung von Tetraethylorthosilikat (TEOS) und 3-Methacryloxypropyltrimethoxysilane 98% (MPS) verwendet.

Die Allgemeinheit der Lehre nicht einschränkend ist hier die Herstellung einiger erfindungsgemäßer Beschichtungen
*Für die Folgenden Beispiele wurden in allen Fällen eingesetzt:*
*Als Alkohol Ethanol mit einer Reinheit von 99,5 vol%,*
*Wasser immer mit Reinheitsgrad dest. (H₂O)*
*Als Hydrolysebeschleuniger wird eine wässrige 25 Gew.-% Lösung von Ammoniak eingesetzt (NH₃ 25%).*
*Als Komplexbildner wird EDA mit einer Reinheit von 99 Gew.-% eingesetzt.*

### TiO2: Konzentration der Lösung 0,1M

*Herstellung einer 0,1M Ti-Lösung mit.EDA als Komplexbildner zur Kontrolle der Hydrolyse und Schichteigenschaften:*
*1) 0,295 ml Titanpropoxid (Tipo) werden unter Rühren in 5ml Ethanol gelöst.*
*2) Zugabe von 0,017 ml EDA*
*3) 0,025 ml NH₃ 25% mit 5 ml Ethanol mischen*
*4) Zügiges Zusammengeben der beiden Lösungen*
*5) Polymernetz bei Raumtemperatur 3 Stunden eintauchen*
*6) Nach der Entnahme des Polymer-Netzes aus der Lösung erfolgt eine Reinigung in Ethanol mittels Ultraschallbad und Trocknung des Substrates bei 80°C über den Zeitraum von 1 Stunde.*

*Das Ende der Eintauchzeit ist an einer Eintrübung der Lösung zu erkennen.*

*Für obige Lösung ist das Verhältnis EDA: Tipo* = *1:4*

*Eine schnellere Schichtbildung erfolgt durch Reduzieren der EDA-Konzentration, z. B.*
*EDA:Tipo = 1:8 bzw. 1:16. Hierdurch werden die Schichten dicker und die Beschichtungszeit für eine 100 nm Schicht kürzer (1:4 (3 Stunden); 1:8 (2 Stunden); 1:16 (45 Minuten)).*
*Für obige Lösung ist das Verhältnis EDA: Tipo = 1:4*

### ZnO: Konzentration der Lösung 15mM

*Herstellung einer 15mM Zn-Lösung mit EDA als Komplexbildner zur Kontrolle der Hydrolyse und Schichteigenschaften:*
*Zunächst wird eine 15mM Zn(NO₃)₂-Lsg. hergestellt, dazu 0, 223g Zn(NO₃)₂*6H2O unter Rühren in 50 ml H20 lösen, anschließend werden 10 ml dieser Lösung vorgelegt (Lösung A)*
*Zugabe von*
   *1) Bereitstellen von 10ml einer 15mM-Lsg. von Zn(NO₃)₂*6H2O in H₂O*
   *2) Zugabe von 5µl EDA (Verhältnis EDA:ZnO 1:2) unter Rühren*
   *3) Zugabe von 40µl NH₃ 25% unter Rühren*
   *4) Polymer-Netz in die Lösung bei Raumtemperatur 2 Stunden eintauchen*
   5) *Nach der Entnahme des Polymer-Netzes aus der Lösung erfolgt eine Reinigung in Ethanol mittels Ultraschallbad und Trocknung des Substrates bei 80°C über den Zeitraum von 1 Stunde.*

## Patentansprüche

1. Substratbeschichtungsmasse auf organische Polymere als zu beschichtendes Substrat zur Ausbildung einer Beschichtung, wobei die Substratbeschichtungsmasse gebildet wird aus mindestens einer Chemikalie ausgesucht aus der Liste, umfassend:
- Metallalkoholate,
- Metallester,
- Metallsalz
und die Substratbeschichtungsmasse ferner aufweist:
- mindestens einen Komplexbildner, wobei Komplexbildner Verbindung sind, die über freie Elektronenpaare als Koordinationsstellen verfügen,
- mindestens einen Hydrolysebeschleuniger, bestehend aus einer alkoholischen und/oder wässrigen Lösung von Ammoniumhydroxid, Harnstoff und/oder Ammoniak,
wobei die aus der Substratbeschichtungsmasse gebildete Beschichtung ein oder mehrere Metalloxide der Metalle ausgesucht aus der Liste, umfassend: Al, Ga, Ge, Sn, Pb, Ti, Zr, V, Nb, Ta, Mo, W und Zn enthält.

2. Substratbeschichtungsmasse nach Patentanspruch 1, **dadurch gekennzeichnet, dass** das mindestens eine Metalloxid in der Beschichtung zu mindestens 80 Gew % - bezogen auf die Gesamtmasse der Beschichtung vorliegt.

3. Substratbeschichtungsmasse nach einem der Patentansprüche 1 und 2, **dadurch gekennzeichnet, dass** das mindestens eine Metalloxid in der Beschichtung zu mindestens 90 Gew.-% - bezogen auf die Gesamtmasse der Beschichtung - vorliegt.

4. Substratbeschichtungsmasse nach einem der Patentansprüche 1 bis 3, **dadurch gekennzeichnet, dass** das Metallalkoholate ausgesucht ist aus der Liste, umfassend: Aluminiumbutylat, Titanisopropoxid, Titanpropoxid, Titanbutoxid, Zirkoniumisopropoxid, Zirkoniumpropoxid, Zirkoniumbutoxid, Zirkoniumethoxid, Tantalethoxid Tantalbutoxid, Niobethoxid, Niobbutoxid, Zinn-t-butoxid, Wolfram (VI) ethoxid, Germaniumethoxid, und Germaniumisopropoxid.

5. Substratbeschichtungsmasse nach einem der Patentansprüche 1 bis 4, **dadurch gekennzeichnet, dass** der Metallester ausgesucht ist aus der Liste, umfassend: Zinkethylhexanoat, Zinkneodecanoat, Zinkoctanoat, Zinkacetylacetonat, Zinnethylhexanoat, Zinnoctanoat, Zinnlaurat, Dibutylzinndimaleat, Dioctylzinndiacetat und Aluminiumtri(ethylacetoacetat).

6. Substratbeschichtungsmasse nach einem der Patentansprüche 1 bis 5, **dadurch gekennzeichnet, dass** der Komplexbildner ausgesucht ist aus der Liste, umfassend: Ethylendiamin (EDA), Diethylentriamin (DETA), Triethylentetramin (TETA) Ethylendiamintetraessigsäure (EDTA) 2-(2-Aminoethylamino)ethanol (AEEA) Diethanolamin (DEA) und Diethylentriaminpentaessigsäure (DTPA).

7. Substratbeschichtungsmasse nach einem der Patentansprüche 1 bis 6, **dadurch gekennzeichnet, dass** die Substratbeschichtungsmasse mindestens ein Kation eines Metalles enthält, ausgesucht aus der Liste, umfassend:
Kupfer (Cu), Silber (Ag), Gold (Au), Platin (Pt), Nickel (Ni), Palladium (Pd), Lithium (Li), Zink (Zn) und Eisen (Fe).

8. Substratbeschichtungsmasse nach Patentanspruch 7, **dadurch gekennzeichnet, dass** das Kation ein Silberkation ist.

9. Substratbeschichtungsmasse nach einem der Patentansprüche 1 bis 8, **dadurch gekennzeichnet, dass** die Substratbeschichtungsmasse mindestens eine Säure enthält, ausgesucht aus der Liste, umfassend:
- hydratisierte Hexachloroplatinsäure (H₂[PtCl₆] • n H₂O),
- hydratisierte Hexachloropalladiumsäure (H₂[PdCl₆] • nH₂O),
- hydratisierte Tetrachlorogoldsäure (H[AuCl₄] • x H₂O).

10. Substratbeschichtungsmasse nach einem der Patentansprüche 1 bis 9, **dadurch gekennzeichnet, dass** das molare Verhältnis von Metall zu Komplexbildner in der Substratbeschichtungsmasse in einem Bereich von 1:4 bis 1:20 liegt.

11. Substratbeschichtungsmasseherstellungsverfahren einer Substratbeschichtungsmasse nach einem der Patentansprüche 1 bis 10, und Substratbeschichtungsmasseverarbeitung einer Substratbeschichtungsmasse nach einem der Patentansprüche 1 bis 10 auf einem Substrat aus einem organischen Polymer zu einer Substratbeschichtung auf dem Substrat, mindestens die Verfahrensschritte aufweisend
i) Bereitstellen einer alkoholischen und/ oder wässrigen Lösung eines Metallalkoholates, eines Metallesters und/oder eines Metallsalzes als Lösung A;
wobei es sich um Metallalkoholate und/oder Metallester und/oder Metallsalze der Metalle Al, Ga, Ge, Sn, Pb, Ti, Zr, V, Nb, Ta, Mo, W und Zn handelt;
ii) Vermischen der Lösung A mit einem Komplexbildner zur Herstellung einer Lösung B;
iii) Bereitstellen des Hydrolysebeschleunigers aus der Lösung C;
iv) Zusammengeben von Lösung B und Lösung C zur Ausbildung von Lösung D;
v) Eintauchen des organischen Polymers als zu beschichtendes Substrat in die Lösung D für einen Zeitraum in einem Bereich von 5 Minuten bis 4 Stunden zur Erzeugung der Beschichtung;
vi) Entnahme des beschichteten Substrates aus der Lösung D;
vii) Behandlung des beschichteten Substrates mit Ultraschall; und
viii) Trocknung des beschichteten Substrates.

12. Verfahren nach Patentanspruch 11, mindestens den zusätzlichen Verfahrensschritt aufweisend:
Zugabe eines Salzes oder einer Säure zur Funktionalisierung zur Lösung B, wobei Säuren zur Funktionalisierung ausgewählt sein können aus der Gruppe hydratisierte Hexachloroplatinsäure (H₂[PtCl₆] • n H₂O), hydratisierte Hexachloropalladiumsäure (H₂[PdCl₆] • n H₂O) oder hydratisierte Tetrachforogoldsäure (H[AuCl₄] • x H₂O) und wobei die Salze aus Anionen und Kationen bestehen und die Kationen Kationen von Metallen sein können ausgewählt aus der Gruppe Kupfer (Cu), Silber (Ag), Gold (Au), Platin (Pt), Nickel (Ni), Palladium (Pd), Lithium (Li), Zink (Zn) und Eisen (Fe).

13. Verfahren nach einem der Patentansprüche 11 und 12, **dadurch gekennzeichnet, dass** die Konturen des Polymeren Substrates nach Beschichtung im Bereich von kleiner gleich 1 µm erhalten bleiben.

14. Verfahren nach einem der Patentansprüche 11 bis 13, **dadurch gekennzeichnet, dass** das molare Verhältnis von Metall zu Komplexbildner in der Beschichtungsmasse in einem Bereich von 1:4 bis 1:20 liegt.

15. Verfahren nach einem der Patentansprüche 11 bis 14, **dadurch gekennzeichnet, dass** die Einstellung der Schichtdicke der Beschichtung durch die Wahl einer Eintauchdauer und das gewählte molaren Verhältnis von Metall und Komplexbildner erfolgt.

## Claims

1. A substrate coating composition on organic polymers as a substrate to be coated for the formation of a coating, wherein the substrate coating composition is formed from at least one chemical selected from the list comprising:
- metal alcoholates
- metal ester
- metal salt
and the substrate coating composition further comprises:
- at least one complexing agent, wherein complexing agents are compounds that have lone pairs of electrons available as coordination sites,
- at least one hydrolysis accelerator consisting of an alcoholic and/or aqueous solution of ammonium hydroxide, urea and/or ammonia,
wherein the coating formed from the substrate coating composition contains one or more metal oxides of the metals selected from the list comprising: Al, Ga, Ge, Sn, Pb, Ti, Zr, V, Nb, Ta, Mo, W and Zn.

2. The substrate coating composition according to claim 1, **characterised in that** the at least one metal oxide in the coating is present in a quantity of at least 80 wt.% - based on the total mass of the coating.

3. The substrate coating composition according to one of claims 1 and 2, **characterised in that** the at least one metal oxide in the coating is present in a quantity of at least 90 wt.% - based on the total mass of the coating.

4. The substrate coating composition according to one of claims 1 to 3, **characterised in that** the metal alcoholate is selected from the list comprising: aluminium butylate, titanium isopropoxide, titanium propoxide, titanium butoxide, zirconium isopropoxide, zirconium propoxide, zirconium butoxide, zirconium ethoxide, tantalum ethoxide, tantalum butoxide, niobium ethoxide, niobium butoxide, tin t-butoxide, tungsten(VI) ethoxide, germanium ethoxide and germanium isopropoxide.

5. The substrate coating composition according to one of claims 1 to 4, **characterised in that** the metal ester is selected from the list comprising:
zinc ethylhexanoate, zinc neodecanoate, zinc octanoate, zinc acetylacetonate, tin ethylhexanoate, tin octanoate, tin laurate, dibutyltin dimaleate, dioctyltin diacetate and aluminium tri(ethyl acetoacetate).

6. The substrate coating composition according to one of claims 1 to 5, **characterised in that** the complexing agent is selected from the list comprising: ethylenediamine (EDA), diethylenetriamine (DETA), triethylenetetramine (TETA), ethylenediaminetetraacetic acid (EDTA) 2-(2-aminoethylamino)ethanol (AEEA) diethanolamine (DEA) and diethylenetriaminepentaacetic acid (DTPA).

7. The substrate coating composition according to one of claims 1 to 6, **characterised in that** the substrate coating composition contains at least one cation of a metal selected from the list comprising: copper (Cu), silver (Ag), gold (Au), platinum (Pt), nickel (Ni), palladium (Pd), lithium (Li), zinc (Zn) and iron (Fe).

8. The substrate coating composition according to claim 7, **characterised in that** the cation is a silver cation.

9. The substrate coating composition according to one of claims 1 to 8, **characterised in that** the coating composition contains at least one acid selected from the list comprising:
- hydrated hexachloroplatinic acid (H₂[PtCl₆] • n H₂O),
- hydrated hexachloropalladic acid (H₂[PdCl₆] • n H₂O),
- hydrated tetrachloroauric acid (H[AuCl₄] • x H₂O).

10. The substrate coating composition according to one of claims 1 to 9, **characterised in that** the molar ratio of metal to complexing agent in the substrate coating composition is in a range of 1:4 to 1:20.

11. A substrate coating composition production method for a substrate coating composition according to one of claims 1 to 10 and substrate coating composition processing of a substrate coating composition according to one of claims 1 to 10 on a substrate composed of an organic polymer to form a substrate coating on the substrate, comprising at least the process steps of:
i) preparing an alcoholic and/or aqueous solution of a metal alcoholate, a metal ester and/or a metal salt as solution A;
these being metal alcoholates and/or metal esters and/or metal salts of the metals Al, Ga, Ge, Sn, Pb, Ti, Zr, V, Nb, Ta, Mo, W and Zn;
ii) mixing solution A with a complexing agent to produce a solution B;
iii) preparing the hydrolysis accelerator from solution C;
iv) adding together solution B and solution C to form solution D;
v) immersing the organic polymer as the substrate to be coated into solution D for a period in a range of 5 minutes to 4 hours to produce the coating;
vi) removing the coated substrate from solution D;
vii) treating the coated substrate with ultrasound; and
viii) drying the coated substrate.

12. The method according to claim 11, comprising at least the additional process step of:
adding a salt or an acid for functionalising to solution B, wherein acids for functionalising can be selected from the group of hydrated hexachloroplatinic acid (H₂[PtCl₆] • nH₂O), hydrated hexachloropalladic acid (H₂[PdCl₆] n H₂O) or hydrated tetrachloroauric acid (H[AuCl₄] • x H₂O) and wherein the salts consist of anions and cations and the cations can be cations of metals selected from the group of copper (Cu), silver (Ag), gold (Au), platinum (Pt), nickel (Ni), palladium (Pd), lithium (Li), zinc (Zn) and iron (Fe).

13. The method according to one of claims 11 and 12, **characterised in that** the contours of the polymer substrate after coating remain in the range of less than or equal to 1 µm.

14. The method according to one of claims 11 to 13, **characterised in that** the molar ratio of metal to complexing agent in the coating composition is in a range of 1:4 to 1:20.

15. The method according to one of claims 11 to 14, **characterised in that** the adjustment of the film thickness of the coating takes place by means of the selection of an immersion period and the selected molar ratio of metal and complexing agent.

## Revendications

1. Pâte de revêtement pour un substrat à appliquer sur des polymères organiques en tant que substrat à recouvrir en vue de former un revêtement, la pâte de revêtement pour substrat étant formée d'au moins un produit chimique sélectionné dans la liste comprenant :
- les alcoolates métalliques,
- les esters métalliques,
- les sels métalliques
et la pâte de revêtement de substrat comprenant entre outre :
- au moins un agent complexant, les agents complexants étant des substances qui disposent de paires d'électrons libres en tant que positions de coordination,
- au moins un accélérateur d'hydrolyse, constitué d'une solution alcoolique et/ou aqueuse d'hydroxyde d'ammonium, d'urée et/ou d'ammoniaque,
le revêtement formé à partir de la pâte de revêtement de substrat contenant un ou plusieurs oxydes métalliques des métaux sélectionnés dans la liste comprenant : Al, Ga, Ge, Sn, Ti, Zr, V, Nb, Ta, Mo, W et Zn.

2. Pâte de revêtement de substrat selon la revendication 1, **caractérisée en ce que** le au moins un oxyde métallique est présent dans le revêtement à au moins 80 % en poids rapporté à la masse totale du revêtement.

3. Pâte de revêtement de substrat selon l'une des revendications 1 ou 2, **caractérisée en ce que** le au moins un oxyde métallique est présent dans le revêtement à au moins 90 % en poids rapporté à la masse totale du revêtement.

4. Pâte de revêtement de substrat selon l'une des revendications 1 à 3, **caractérisée en ce que** l'alcoolate métallique est sélectionné dans la liste comprenant : le butylate d'aluminium, l'isopropoxyde de titane, le propoxyde de titane, le butoxyde de titane, l'isopropoxyde de zirconium, le propoxyde de zirconium, le butoxyde de zirconium, le méthoxyde de zirconium, l'éthoxyde de tantale, le butoxyde de tantale, l'éthoxyde de niobium, le butoxyde de niobium, le t-butoxyde d'étain, l'éthoxyde de tungstène (VI), le méthoxyde de germanium et l'isopropoxyde de germanium.

5. Pâte de revêtement de substrat selon l'une des revendications 1 à 4, **caractérisée en ce que** l'ester métallique est sélectionné dans la liste comprenant : l'hexanoate d'éthyle de zinc, le néodécanoate de zinc, l'octanoate de zinc, l'acétonate d'acétyle de zinc, l'hexanoate d'éthyle d'étain, l'octanoate d'étain, le laurate d'étain, le maléate de dibutyle d'étain, le diacétate de dioctyle d'étain et le tri(acétoacétate d'éthyle) d'aluminium.

6. Pâte de revêtement de substrat selon l'une des revendications 1 à 5, **caractérisée en ce que** l'agent complexant est sélectionné dans la liste comprenant : l'éthylène diamine (EDA), la diéthylène triamine (DETA), la triéthylène tétramine (TETA), l'acide éthylène diamine tétraacétique (EDTA), la 2-(2-aminoéthylamino)éthanol (AEEA), la diéthanolamine (DEA) et l'acide diéthylène triamine penta acétique (DTPA).

7. Pâte de revêtement de substrat selon l'une des revendications 1 à 6, **caractérisée en ce que** la pâte de revêtement de substrat contient au moins un cation d'un métal sélectionné dans la liste comprenant : le cuivre (CU), l'argent (Ag), l'or (Au), le platine (Pt), le nickel (Ni), le palladium (Pd), le lithium (Li), le zinc (Zn) et le fer (Fe).

8. Pâte de revêtement de substrat selon la revendication 7, **caractérisée en ce que** le cation est un cation d'argent.

9. Pâte de revêtement de substrat selon l'une des revendications 1 à 8, **caractérisée en ce que** la pâte de revêtement de substrat contient au moins un acide sélectionné dans la liste comprenant :
- l'acide hexachloroplatinique hydraté (H₂[PtCl₆] • n H₂O),
- l'acide hexachloropalladiumique hydraté (H₂[PdCl₆] • n H₂O),
- l'acide tétrachloroaurique hydraté (H[AuCl₄] • x H₂O),

10. Pâte de revêtement de substrat selon l'une des revendications 1 à 9, **caractérisée en ce que** le rapport molaire entre le métal et l'agent complexant dans la pâte de revêtement de substrat se situe dans la fourchette comprise entre 1:4 et 1:20.

11. Procédé de fabrication d'une pâte de revêtement de substrat selon l'une des revendications 1 à 10, et travail d'une pâte de revêtement de substrat selon l'une des revendications 1 à 10 sur un substrat à base d'un polymère organique pour obtenir un revêtement de substrat sur le substrat, comprenant au moins les étapes de procédé consistant à
i)préparer une solution alcoolique et/ou aqueuse d'un alcoolate métallique, d'un ester métallique et/ou d'un sel métallique en tant que solution A ;
étant précisé qu'il s'agit d'un alcoolate métallique et/ou d'un ester métallique et/ou d'un sel métallique des métaux Al, Ga, Ge, Sn, Pb, Ti, Zr, V, Nb, Ta, Mo, W et Zn,
ii) mélanger la solution A avec un agent complexant pour fabriquer une solution B ;
iii) préparer l'accélérateur d'hydrolyse à partir de la solution C ;
iv) combiner la solution B et la solution C pour former une solution D ;
v) plonger le polymère organique en tant que substrat à revêtir dans la solution D durant un intervalle de temps compris entre 5 minutes et 4 heures pour produire le revêtement ;
vi) sortir de la solution D le substrat revétu ;
vii)traiter le substrat revêtu aux ultrasons ; et
viii) sécher le substrat revêtu.

12. Procédé selon la revendication 11 comprenant au moins les étapes de procédé supplémentaires consistant à
ajouter un sel ou un acide en vue de fonctionnaliser la solution B, étant précisé que les acides pour la fonctionnalisation peuvent être sélectionnés dans le groupe de l'acide hexachloroplatinique hydraté (H₂[PtCl₆] · n H₂O), l'acide hexachloropalladiumique hydraté (H₂[PdCl₆] · n H₂O ou l'acide tétrachloroaurique hydraté (H[AuCl₄] · x H₂O) et les sels se composent d'anions et de cations et les cations sont des cations de métaux pouvant être sélectionnés dans le groupe comprenant le cuivre (CU), l'argent (Ag), l'or (Au), le platine (Pt), le nickel (Ni), le palladium (Pd), le lithium (Li), le zinc (Zn) et le fer (Fe).

13. Procédé selon l'une des revendications 11 et 12, **caractérisé en ce que** les contours du substrat de polymère, après revêtement, restent dans le domaine inférieur ou égal à 1 µm.

14. Procédé selon l'une des revendications 11 à 13, **caractérisé en ce que** le rapport molaire entre le métal et l'agent complexant dans la pâte de revêtement se situe dans la fourchette comprise entre 1:4 et 1:20.

15. Procédé selon l'une des revendications 11 à 14, **caractérisé en ce que** l'ajustage de l'épaisseur de couche du revêtement est réalisé par le choix de la durée de plongée et par le rapport molaire choisi entre le métal et l'agent complexant.
